## Europäisches Patentamt

## European Patent Office

## Office européen des brevets

(11) Veröffentlichungsnummer: **0 155 624**
**B1**

(12) **EUROPÄISCHE PATENTSCHRIFT**

(45) Veröffentlichungstag der Patentschrift:
28.12.88

(51) Int. Cl.⁴: **F 16 C 39/06**

(21) Anmeldenummer: **85102790.4**

(22) Anmeldetag: **12.03.85**

(54) **Magnetlager zur dreiachsigen Lagerstabilisierung von Körpern.**

(30) Priorität: **13.03.84 DE 3409047**

(43) Veröffentlichungstag der Anmeldung:
**25.09.85 Patentblatt 85/39**

(45) Bekanntmachung des Hinweises auf die Patenterteilung:
**28.12.88 Patentblatt 88/52**

(84) Benannte Vertragsstaaten:
**AT BE CH DE FR GB IT LI LU NL SE**

(56) Entgegenhaltungen:
**DE-A- 2 504 766**
**FR-A- 2 127 772**
**US-A- 3 929 390**

**JOURNAL OF SPACECRAFT AND ROCKETS, Band 17,
Nr. 2, März-April 1980, Seiten 93-98; P.C. POUBEAU:
"Satellite flywheels with magnetic bearings and
passive radial centering"**

(73) Patentinhaber: **Kernforschungsanlage Jülich
Gesellschaft mit beschränkter Haftung, Postfach 1913,
D-5170 Jülich 1 (DE)**

(72) Erfinder: **Fremerey, Johan K., Dr.,
Mönkemöllerstrasse 19, D-5300 Bonn 1 (DE)**
Erfinder: **Weller, Albrecht, Dr., Hessenring 81,
D-6374 Steinbach/Taunus (DE)**

## Beschreibung

Die Erfindung bezieht sich auf ein im Oberbegriff des Patentanspruches 1 angegebenes Magnetlager zur dreiachsigen Lagerstabilisierung von Körpern.

Magnetlager dieser Art sind beispielsweise aus US-A-3 860 300 und DT-C-2 444 099 bekannt. Sie werden insbesondere zur axialen Stabilisierung von magnetisch gelagerten Rotoren verwendet, vgl. beispielsweise Voss/Cohem, «UHV compatible chopper system» in J. Vac. Sci. Technol., 1980, Vol. 17, Nr. 1, S. 303ff., und Fremerey/Boden «Active permanent magnet suspensions for scientific instruments» in J. Phys. E.: Sci. Instrum., 1978, Vol. 11, S. 106ff. Der Vorteil dieser bekannten permanentmagnetischen Rotorlager besteht darin, dass sie zum Zwecke der allseitig berührungslosen Lagerung nur eine Stabilisierung in Richtung der Rotorachse erforderlich machen. Dieser Vorteil wird allerdings durch den ebenso bekannten Nachteil erkauft, dass solche Lagerungen an den radialen Richtungen praktisch keine Dämpfung aufweisen. Den daraus resultierenden Problemen beim Durchfahren von kritischen Rotordrehzahlen kann in begrenztem Masse mit erhöhtem Aufwand beim Auswuchten des Rotorsystems begegnet werden, wie das von Voss/Cohem in ihrer oben angegebenen Veröffentlichung beschrieben wird. Bekannt ist es auch, zusätzliche elektronische oder mechanische Dämpfeinrichtungen zu verwenden, um den störenden Einfluss von Erschütterungen auf die Rotorlagerung zu mindern, vgl. Fremerey «Spinning rotor vacuum gauges» in Vacuum, 1982, Vol. 32, Nr. 10/11, S. 685ff.

Zur Stabilisierung von Magnetlagern werden auch Wirbelstrom-Dämpfvorrichtungen verwendet. So wird in US-A-3 929 390 das Anbringen von ortsfesten Kupferscheiben an den Stirnflächen von an rotierenden Teilen befestigten Permanentmagneten vorgeschlagen, um ein Lagersystem zu stabilisieren.

Solche Dämpfvorrichtungen haben einen in Bezug auf das eingesetzte permanentmagnetische Material geringen Wirkungsgrad, weil an den freien Enden der Permanentmagnete das von diesen erzeugte Magnetfeld stark divergiert, und somit die für die angestrebte radiale Wirbelstromdämpfung erforderlichen Feldkomponenten in axialer Richtung nur eine geringe Reichweite in eine Kupferscheibe hinein haben.

Ein Wirbelstromdämpfer ist auch aus DE-A-2 504 766 bekannt. Bei dieser Dämpfeinrichtung bilden die Kupferringe nur Teilstücke am Rande der Luftspalte und sind so für die Dämpfung nicht in ausreichendem Masse wirksam.

Auch bei einem über einer umlaufenden Scheibe geschlossenem Magnetkreis, wie er aus Journal of Spacecraft and Rockets, Band 17, Nr. 2, 1980, Seiten 93 bis 98 bekannt ist, ist eine Dämpfung gering, da sich auf der Scheibe zwangsläufig Magnetfeld freie Bereiche ergeben, die zur Dämpfung nichts beitragen.

Wesentlich höhere Wirkungsgrade werden erzielt durch Anbringen von ortsfesten Kupferscheiben im Feld zwischen zwei hintereinander geschalteten Permanentmagneten, vgl. Report ESA-CR (P)-696 MU/EX No. 47.055/15, Seite 12. Bei dieser Vorrichtung verlaufen die Magnetfelder innerhalb des Kupfers im wesentlichen in axialer Richtung, so dass eine optimale Feldausnutzung zur Wirbelstromdämpfung von radialen Rotorbewegungen gewährleistet ist. Nachteilig ist bei dieser Wirbelstromdämpfung, die auch in Journal of Spacecraft and Rockets, Band 17, Nr. 2, 1980, Seiten 93 bis 98 beschrieben ist, dass aufgrund der konzentrischen Anbringung von jeweils zwei entgegengesetzt axialmagnetisierten permanentmagnetischen Ringen ein beträchtlicher radialer Streufluss parallel zur Kupferplatte entsteht, der nur durch ein zusätzliches Anbringen von radialmagnetisierten permanentmagnetischen Ringen im Streuflussbereich soweit kompensierbar ist, dass eine ausreichende Dämpfwirkung zustande kommt. Die Notwendigkeit solcher Ringe wird in der älteren der vorgenannten Druckschriften, im Report ESA-CR(P)-696 beschrieben. Der konstruktive Aufwand ist dann allerdings erheblich. Es werden insgesamt 6 ringförmige Permanentmagnete benötigt, von denen 2 auch noch die herstellungstechnisch ungünstige radiale Magnetisierungsrichtung aufweisen müssen. Wesentlich einfacher in ihrer konstruktiven Gestaltung des magnetischen Kreises hinsichtlich des erzielten Wirkungsgrades ist die von Fremerey in «High vacuum gas friction manometer» in J. Vac. Sci. Technol., 1972, Vol. 9, Nr. 1, S. 108ff., beschriebene radiale Wirbelstromdämpfung eines an Fäden aufgehängten Magnetsystems. Hier wird eine ortsfeste Kupferscheibe von einem axial verlaufenden Magnetfeld zwischen der Stirnfläche eines Permanentmagneten und einer flachen Eisenscheibe durchdrungen. Bei dieser Vorrichtung ist allerdings die Ankopplung der Wirbelstrom-Dämpfvorrichtung an den berührungslos gelagerten Körper sehr aufwendig. Es sind hierzu elektronische Verstärker mit mehrgliedrigen Abtastspulen und elektromagnetischen Ablenkspulen in jeweils zwei voneinander unabhängigen Richtungen erforderlich.

Die beiden zuletzt angegebenen Vorrichtungen haben neben dem beschriebenen Aufwand den Nachteil, dass sie allein zur radialen Dämpfung benutzt werden können. Magnetische Lager stellen sie nicht dar.

Lediglich die bereits weiter oben erwähnte Wirbelstrom-Dämpfvorrichtung nach US-A-3 929 390 benutzt für die Dämpfung die Permanentmagnete des Radiallagers, sie hat aber aus den oben genannten Gründen nur einen geringen Wirkungsgrad. Das zur magnetischen Lagerung erforderliche Axiallager ist an anderem Ort angeordnet.

Aufgabe der Erfindung ist es, ein im Aufbau möglichst einfaches Magnetlager zur dreiachsigen berührungslosen Lagerstabilisierung von Körpern mit wirkungsvoller Wirbelstromdämpfung zu schaffen, in welchem der Fluss eines einzigen permanentmagnetischen Kreises für die axiale Stabilisierung und gleichzeitig für die radiale Zentrierung und Dämpfung genutzt wird.

Diese Aufgabe wird bei einem Magnetlager der eingangs angegebenen Art gemäss der Erfindung durch die im Patentanspruch 1 angegebenen Merkmale gelöst. Danach wird der permanentmagnetische Fluss durch mindestens einen am beweglichen Lagerteil angebrachten Permanentmagneten erzeugt, der mindestens zwei durch einen senkrecht zur Flussrichtung orientierten Spalt voneinander getrennte Bereiche aufweist. In den Spalt ragt eine Platte aus nicht magnetisierbarem Material hoher elektrischer Leitfähigkeit hinein. Die Platte ist ortsfest angeordnet und berührt das bewegliche Lagerteil nicht.

Dadurch, dass die permanentmagnetischen Bereiche am Spalt angeordnet sind, wird im Spalt parallel zur Achse des rotierenden Körpers ein hoher magnetischer Fluss mit geringen Streuflussanteilen erzeugt.

Der durch die Polflächen austretende magnetische Fluss durchdringt die im Spalt angeordnete Platte aus nicht magnetisierbarem Material hoher elektrischer Leitfähigkeit. Als Plattenmaterial wird bevorzugt Kupfer verwendet. Wenn sich nun das bewegliche Lagerteil mit seinen parallel zur Plattenoberfläche angeordneten Polflächen parallel zur Platte bewegt, so werden in der Platte elektrische Spannungen mit einer Orientierung senkrecht zur Bewegungsrichtung des beweglichen Lagerteils induziert. Der Teil der Platte, der sich innerhalb des Spalts befindet, wird somit zur Spannungsquelle, wobei die Höhe der induzierten Spannung der Bewegungsgeschwindigkeit des beweglichen Lagerteils proportional ist. Der Innenwiderstand dieser Spannungsquelle ergibt sich aus dem Querschnitt und der Länge des vom permanentmagnetischen Fluss durchsetzten Plattenmaterials und ist abhängig von dessen elektrischer Leitfähigkeit.

Die Dämpfung des beweglichen Lagerteils wird dadurch erzielt, dass der nicht magnetisch durchflutete Bereich des Plattenmaterials der elektrisch hochleitfähigen Platte die im Spaltbereich erzeugte Spannungsquelle kurzschliesst, und so ein Kurzschlussstrom fliesst. Die dabei verbrauchte Verlustenergie wird aus der Bewegungsenergie des sich bewegenden Lagerteils gewonnen. Dabei erwärmt sich die Platte, und die Bewegung des beweglichen Lagerteils schwächt sich ab.

Um den elektrischen Widerstand der Platte ausserhalb des magnetisch durchfluteten Bereiches des Plattenmaterials zu verringern, ist es in weiterer Ausbildung der Erfindung nach Patentanspruch 2 vorgesehen, das Plattenmaterial ausserhalb des Spaltes zu verstärken.

Zur Lagerung rotierender Körper ist in Patentanspruch 3 eine bevorzugte Ausbildung des Magnetlagers angegeben. Die Lagerteile sind rotationssymmetrisch ausgebildet, wobei die ortsfesten Lagerteile an einem Hohlzylinder aus magnetisch gut leitendem Material befestigt sind, der zur Flussleitung und zur magnetischen Abschirmung des Magnetlagers dient. Der Hohlzylinder schirmt das Magnetlager einerseits gegenüber äusseren Störfeldern ab, so dass ein einwandfreier Betrieb des Magnetlagers auch in der Nachbarschaft von anderen elektromagnetischen Einrichtungen, beispielsweise Antriebsmotoren, gesichert ist. Andererseits verhindert die Abschirmung auch vom Magnetlager selbst ausgehende magnetische Störungen auf benachbarte Vorrichtungen. Darüber hinaus bildet das Magnetlager mit Hohlzylinder eine quasi geschlossene Einheit, die mechanisch robust und leicht zu handhaben ist.

Die Eigenschaften des Magnetlagers kommen in besonders günstiger Weise zur Wirkung bei dessen Verwendung zur Stabilisierung von passiven permanentmagnetischen Lagersystemen, Patentanspruch 4. Solche Lager weisen bei rotationssymmetrischer Ausbildung in Richtung der Lagerachse eine erhebliche Kraftinstabilität auf, die den gelagerten Rotationskörper nach der einen oder anderen Seite aus seiner magnetischen Neutralstellung heraus an den nächstmöglichen axialen mechanischen Anschlag treiben. Diese Instabilität wird durch Anbringen des erfindungsgemässen Magnetlagers beseitigt. Das radial passive permanentmagnetische Lagersystem kann so auch im Bereich von kritischen Drehzahlen betrieben werden, ohne dass dynamische Instabilitäten, wie beispielsweise Nutationen, störend in Erscheinung treten. Die Dämpfwirkung des Magnetlagers auf Drehschwingungen der Rotationsachse des gelagerten Körpers um eine Querachse ist um so günstiger, je weiter das Magnetlager vom Schwerpunkt des rotierenden Körpers entfernt angebracht ist. Bevorzugt eignet sich das Magnetlager zur Stabilisierung von Lagersystemen für Schwungräder. Von besonderem Vorteil ist ferner seine Verwendung als Trag- oder Stützlager für Ultrazentrifugen mit vertikaler Rotationsachse sowie für Turbomolekularpumpen.

Die Erfindung wird nachfolgend anhand von Ausführungsbeispielen näher erläutert, die in der Zeichnung schematisch wiedergegeben sind. Die Zeichnung zeigt im einzelnen:

Fig. 1 Magnetlager für rotierende Körper,

Fig. 2 Lagersystem mit passiver permanentmagnetischer Radiallagerung, das durch ein Magnetlager nach Fig. 1 stabilisiert ist.

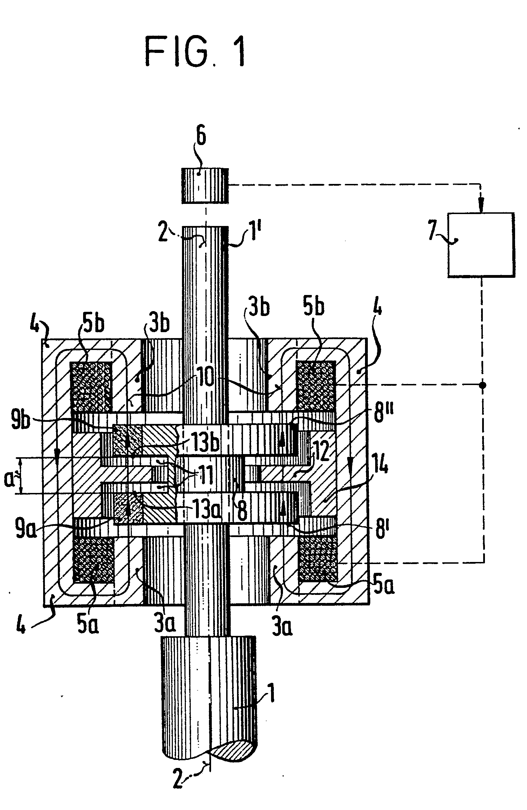

In Fig. 1 ist ein rotationssymmetrisches Magnetlager dargestellt. Das Magnetlager dient als Trag- oder Stützlager für eine Welle 1 eines um eine vertikale Achse 2 rotierenden Körpers. Das Magnetlager weist ortsfeste Lagerteile 3a, 3b auf, die Bestandteil eines aus magnetisch gut leitendem Material, vorzugsweise aus Eisen gefertigten Hohlzylinders 4 sind. Die ortsfesten Lagerteile 3a, 3b bilden mit dem Hohlzylinder 4 verbundene Ringe, die im Ausführungsbeispiel an beiden Enden des Hohlzylinders 4 angeordnet sind. Zwischen den ringförmigen ortsfesten Lagerteilen 3a, 3b und dem Hohlzylinder 4 befinden sich zur Steuerung des Magnetlagers elektrische Spulen 5a, 5b, deren Stromdurchgang über ein Sensorsystem 6 und einen elektronischen Regler 7 gesteuert wird. Die elektrischen Verbindungsleitungen sind in der Zeichnung strichliniert dargestellt. Das Sensorsystem tastet die Lage der Welle 1 des rotierenden Körpers ab. Ein Wellenteil 1' durchdringt den Hohlzylinder 4 axial. Auf dem Wellenteil 1' sitzt ein Lagerteil 8, das mit der Welle rotiert und somit das bewegliche Lagerteil des Magnetlagers bildet. Das bewegliche Lagerteil 8 ist zwischen den ortsfesten Lagerteilen 3a, 3b angeordnet, wobei gegenüberliegende Seiten 8', 8" des beweglichen Lagerteils 8 den ortsfesten Lagerteilen 3a, 3b unter Ausbildung eines geringen Zwischenraums eng gegenüberstehen. Zwischen beweglichen und ortsfesten Lagerteilen verläuft der magnetische Fluss parallel zur Achse 2. Der die Achse 2 torroidal umgebende magnetische Fluss ist in Fig. 1 durch einen die im Schnitt dargestellten Lagerteile durchdringenden, jeweils geschlossenen Linienzug markiert.

Das bewegliche Lagerteil 8 weist zwei permanentmagnetische Bereiche 9a, 9b auf, die mit axialem Abstand a zueinander angeordnet sind und zwischen sich einen senkrecht zum erzeugten magnetischen Fluss mit Flussrichtung 10 orientierten Spalt 11 bilden, der die Lagerbereiche 9a, 9b voneinander trennt. In den Spalt 11 ragt eine ringförmige Platte 12 hinein, die ortsfest angeordnet und im Ausführungsbeispiel am Hohlzylinder 4 befestigt ist. Die Platte 12 ragt in den Spalt 11 so weit hinein, dass sie vom magnetischen Fluss durchsetzt wird. Die Platte 12 besteht aus nichtmagnetisierbarem Material hoher elektrischer Leitfähigkeit, vorzugsweise aus Kupfer.

Zur Ausbildung der permanentmagnetischen Bereiche 9a, 9b wird an deren Polflächen 13a, 13b am Spalt 11 als permanentmagnetisches Material bevorzugt eine Seltenerde-Kobalt-Legierung verwendet. Dieses hochkoerzitive Material ist parallel zur Achse 2 magnetisiert und so angeordnet, dass die Bereiche 9a, 9b hintereinandergeschaltete Permanentmagnete bilden. Zusammen mit den ortsfesten Lagerteilen 3a, 3b, die magnetisch entgegengesetzt polarisiert sind, ergibt sich somit über den magnetisch gut leitenden Hohlzylinder 4 ein permanentmagnetischer Fluss in einer vorgegebenen Richtung. In Fig. 1 ist die sich im Ausführungsbeispiel ergebende Flussrichtung 10 durch Pfeile kenntlich gemacht. Das ortsfeste Lagerteil 3a stellt somit einen magnetischen Nordpol, das Lagerteil 3b einen magnetischen Südpol dar.

Die von den ringförmigen elektrischen Spulen 5a, 5b bei Stromfluss erzeugten magnetischen Felder bewirken bei einer gegensinnigen Stromführung in den Spulen eine Axialkraft, die je nach Stromrichtung in den Spulen in der einen oder anderen Richtung axial auf das bewegliche Lagerteil 8 und damit auf die Welle 1 einwirkt. Das Sensorsystem 6 erzeugt elektrische Signale, die den Abweichungen der Welle aus ihrer vorgegebenen axialen Sollage proportional sind. Die Signale des Sensorsystems 6 werden durch den Regler 7 verstärkt und bestimmen Stromrichtung und Stromstärke in den Spulen 5a, 5b. Die hierdurch mittels der Spulen hervorgerufene axiale Kraft auf das bewegliche Lagerteil 8 wirkt der vom Sensorsystem 6 gemessenen axialen Abweichung der Welle 1 aus der Sollage entgegen. Bei Erreichen der Sollage fliesst kein Strom mehr.

Zwischen den Polflächen 13a, 13b der permanentmagnetischen Bereiche 9a, 9b wird ein hoher magnetischer Fluss erzeugt. Der durch die Polflächen 13a, 13b austretende magnetische Fluss durchdringt in Flussrichtung 10 die in den Spalt 11 hineinragende Platte 12, so dass bei radialen Bewegungen der Welle 1 in der Platte 12 eine Spannung induziert wird. Der innerhalb des Spalts 11 sich befindende Bereich der Platte 12 stellt somit eine Spannungsquelle dar, wobei die Höhe der induzierten Spannung der radialen Bewegungsgeschwindigkeit des beweglichen Lagerteils proportional ist.

Der aus dem Spalt 11 herausragende Teil der Platte 12 wird vom magnetischen Fluss nicht durchflutet. In diesem magnetfeldfreien Raum wird keine elektrische Spannung induziert. Durch diesen äusseren Bereich der Platte 12 wird die im Bereich der Platte innerhalb des Spaltes erzeugte Spannungsquelle kurzgeschlossen. Die mit dem dabei fliessenden Kurzschlussstrom verbundene Verlustenergie wird aus der Bewegungsenergie des rotierenden Körpers gewonnen und schwächt diese ab, wobei sich die Platte 12 erwärmt. Um im äusseren Bereich der Platte 12 im magnetfeldfreien Raum einen möglichst geringen elektrischen Widerstand zu schaffen, weist die Platte 12 in ihrem Bereich ausserhalb des Spaltes 11 eine Materialverstärkung 14 auf, die im Ausführungsbeispiel als symmetrisch zur Spaltebene geformter ringförmiger Kragen ausgebildet ist, der breiter als der Spalt 11 bemessen ist. Durch diese Materialverstärkung 14 lassen sich in der Platte 12 hohe Kurzschlussströme erzielen, die im Vergleich mit nicht verstärkten Platten bei gleich hoch induzierter Spannung zu wesentlich höherer Dämpfleistung führen.

Das bewegliche Lagerteil 8 kann auch mehrere mit Abstand zueinander angeordnete, permanentmagnetische Bereiche mit je einer in die entstandenen Spalte zwischen den Bereichen hineinragenden Platte aufweisen. Die Spalte verlaufen jeweils senkrecht zum magnetischen Fluss, sind somit in Richtung von Achse 2 hintereinander und parallel zueinander angeordnet. Eine solche Ausbildung des Magnetlagers erhöht die Dämpfleistung.

Im Ausführungsbeispiel bilden die permanentmagnetischen Bereiche 9a, 9b des beweglichen Lagerteils 8 ringförmige Permanentmagnete, wobei ein sehr hohes gewichtsspezifisches magnetisches Moment für das bewegliche Lagerteil erzielt wird. Die Gewichtsbelastung des mit der Welle 1 rotierenden Körpers bzw. des Rotorsystems ist somit gering. Die Anordnung der ringförmigen Permanentmagnete in Hintereinanderschaltung führt zu einem optimalen Wirkungsgrad für die Spulen 5a, 5b, die die axialen Abweichungen der Welle korrigieren. Das magnetische Moment des hochkoerzitiven permanentmagnetischen Materials ist derart, dass es weder durch die magnetischen Felder der Spulen 5a, 5b, noch durch ein von aussen in das Lagerelement eindringendes Magnetfeld beeinträchtigt wird. Gleichzeitig gewährleistet die geringe magnetische Leitfähigkeit, die hochkoerzitive magnetische Materialien auszeichnet, in Richtung von Achse 2 des rotierenden Körpers eine relativ geringe magnetische Grund-Instabilität des beweglichen Lagerteils 8 in axialer Richtung gegenüber den ortsfesten Lagerteilen 3a, 3b.

Der Hohlzylinder 4 aus magnetisch gut leitendem Material bildet eine magnetische Abschirmung des Lagerelements, die einerseits vor äusseren magnetischen Störfeldern schützt, andererseits aber auch magnetische Störeinflüsse auf benachbarte Einrichtungen in der Umgebung des Magnetlagers infolge der starken Magnetfelder des Magnetlagers selbst verhindert.

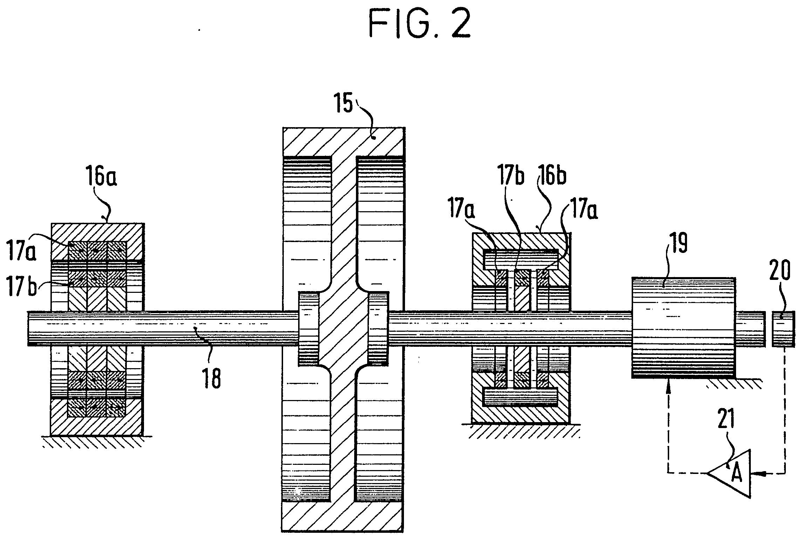

Eine spezielle Anwendung des Magnetlagers nach Fig. 1 ist in Fig. 2 dargestellt. Fig. 2 zeigt ein passives, permanentmagnetisches Lagersystem für ein Schwungrad 15 mit zwei passiven, permanentmagnetischen Radiallagern 16a, 16b, die in bekannter Weise Permanentmagnete 17a, 17b mit radial abstossender (Radiallager 16a) oder axial anziehender Wirkung (Radiallager 16b) aufweisen. Im Ausführungsbeispiel sind die Permanentmagnete 17a ortsfest angeordnet, die Permanentmagnete 17b bilden mit Welle 18 und Schwungrad 15 als Rotorsystem sich bewegende Lagerteile. Eine solche magnetische Lagerung für das Rotorsystem weist in ihrer Neutralstellung, d.h. dann, wenn die beweglichen Permanentmagnete 17b in Achsrichtung der Welle 18 eine bezüglich der ortsfesten Permanentmagnete 17a symmetrische Position einnehmen, eine erhebliche axiale Kraft-Instabilität auf, die das Rotorsystem nach der einen oder anderen Seite aus der Neutralstellung heraustreibt. Diese Instabilität wird durch ein Magnetlager 19 beseitigt, das einen in Fig. 1 dargestellten Aufbau zeigt. Das Magnetlager wird von einem Positions-Sensorsystem 20 mit Verstärker 21 in gleicher Weise gesteuert, wie das vorbeschriebene, in Fig. 1 wiedergegebene Magnetlager. Mit dem Magnetlager 19 lässt sich das Rotorsystem mit Welle 18 und Schwungrad 15 nun auch im Bereich von kritischen Drehzahlen betreiben, ohne dass dynamische Instabilitäten, wie beispielsweise die Nutation störend in Erscheinung treten. Die Dämpfwirkung des Magnetlagers 19 auf Drehschwingungen der Welle 18 um eine Querachse ist um so günstiger, je weiter das Magnetlagerelement 19 vom Schwerpunkt des Rotorsystems entfernt angebracht ist. Selbstverständlich können zur Verstärkung der Dämpfwirkung mehrere Magnetlager 19 eingesetzt werden.

Das erfindungsgemässe Magnetlager zeichnet sich somit durch folgende Merkmale aus:

Das Magnetlager enthält einen einzigen, torroidal geschlossenen permanentmagnetischen Kreis. Der Flussverlauf ist in Fig. 1 durch die mit Flussrichtung 10 markierten geschlossenen Linien angedeutet.

Die axiale berührungslose Stabilisierung des beweglichen Lagerteils 8 zwischen den ortsfesten Lagerteilen 3a und 3b wird mittels der Spulen 5a, 5b erzielt, die vom Sensorsystem 6 und elektronischem Regler 7 mit Strömen in jeweils gegensinnigem Umlaufsinn beaufschlagt werden, wie dies in DE-C-2 444 099 beschrieben ist. Richtung und Betrag dieser Ströme werden durch das Ausgangssignal des Sensorsystems bestimmt, das die axiale Lage der Welle 1 und damit die Lage des beweglichen Lagerteils 8 berührungslos abtastet. Der Regler 7 erzeugt Ströme, die mittels der Spulen 5a, 5b in Verbindung mit den permanentmagnetischen Bereichen 9a, 9b in parallel zur Flussrichtung 10 wirkende Rückstellkräfte umgewandelt werden, sobald sich das bewegliche Lagerteil 8 von derjenigen axialen Position entfernt, bei welcher der Ausgangsstrom des Reglers verschwindet. Der Regler erzeugt gleichzeitig Dämpfkräfte, die unabhängig von der jeweiligen axialen Position allen axialen Bewegungen, insbesondere axialen Schwingungen des beweglichen Lagerteils 8 entgegenwirken.

Die radiale Zentrierung des beweglichen Lagerteils 8 gegenüber den ortsfesten Lagerteilen 3a, 3b ergibt sich durch enge Gegenüberstellung formgleicher Polflächen von permanentmagnetischen Bereichen 9a, 9b und den magnetisierbaren ringförmigen ortsfesten Lagerteilen 3a, 3b, die vorzugsweise aus Eisen bestehen.

Die radiale Dämpfung schliesslich wird durch die zwischen den permanentmagnetischen Bereichen 9a, 9b des beweglichen Lagerteils 8 ortsfest angebrachte Platte 12 aus nichtmagnetisierbarem Material hoher elektrischer Leitfähigkeit, vorzugsweise Kupfer, bewirkt. Bei radialen Bewegungen des Lagerteils 8 werden in den vom magnetischen Fluss durchdrungenen Bereichen der Platte 12 elektrische Spannungen induziert.

Das erfindungsgemässe Magnetlager stellt somit berührungslose Rückstell- bzw. Zentrier- und Dämpfkräfte in drei voneinander unabhängigen Achsrichtungen (eine axiale, zwei radiale) bereit. Es besteht aus nur sieben wesentlichen Bauteilen, nämlich aus zwei Eisenringen, die die ortsfesten Lagerteile 3a, 3b bilden, aus zwei ringförmigen permanentmagnetischen Bereichen 9a, 9b für das bewegliche Lagerteil 8 aus zwei elektrischen Spulen 5a, 5b und einer ringförmigen Platte 12 aus Kupfer. Alle Teile sind in einfacher Weise herzustellen und ohne Aufwand zu montieren.

## Patentansprüche

1. Magnetlager zur dreiachsigen berührungslosen Lagestabilisierung von Körpern, das auf gegenüberliegenden Seiten eines beweglichen Lagerteils (8) ortsfeste Lagerteile (3a, 3b) aufweist, wobei zwischen den ortsfesten Lagerteilen ein das bewegliche Lagerteil in einer Richtung durchdringender permanentmagnetischer Fluss aufrechterhalten wird, und wobei zur Erzeugung von Rückstellkräften parallel zur Flussrichtung (10) an den ortsfesten Lagerteilen elektrische Spulen (5a, 5b) angebracht sind, die von einem die Lage des beweglichen Lagerteils (8) berührungslos abtastenden Sensorsystems (6) und einem Regler (7) angesteuert werden, dadurch gekennzeichnet,

a) dass der permanentmagnetische Fluss durch mindestens einen am beweglichen Lagerteil (8) angebrachten Permanentmagneten erzeugt wird,

b) dass der Permanentmagnet mindestens zwei durch einen senkrecht zur Flussrichtung (10) orientierten Spalt (11) getrennte Bereiche (9a, 9b) aufweist, und

c) dass in den Spalt (11) eine ortsfeste Platte (12) aus nichtmagnetisierbarem Material hoher elektrischer Leitfähigkeit hineinragt, ohne das bewegliche Lagerteil (8) zu berühren.

2. Magnetlager nach Anspruch 1, dadurch gekennzeichnet, dass die Platte (12) ausserhalb des Spaltes (11) eine Materialverstärkung (14) aufweist.

3. Magnetlager nach Anspruch 1 oder 2, dadurch gekennzeichnet, dass das bewegliche Lagerteil (8) und die ortsfesten Lagerteile (3a, 3b) rotationssymmetrisch ausgebildet sind, wobei die ortsfesten Lagerteile (3a, 3b) zur Leitung des permanentmagnetischen Flusses über einen Hohlzylinder (4), der aus einem Material mit hoher magnetischer Leitfähigkeit besteht, miteinander verbunden sind.

4. Verwendung eines Magnetlagers nach einem der vorhergehenden Ansprüche zur Stabilisierung eines passiven permanentmagnetischen Lagersystems.

## Claims

1. Magnetic bearing for three-axis non-contact positional stabilization of bodies which has stationary parts of the bearing (3a, 3b) on opposite sides of a movable part of the bearing (8), in which a permanentmagnetic flux which penetrates the movable part of the bearing in one direction is maintained between the stationary parts of the bearing, and in which electrical coils (5a, 5b), which are controlled by a sensor system (6) scanning the position of the movable part of the bearing (8) without contact and by a controller (7), are attached to the stationary parts of the bearing to generate restoring forces parallel to the flux direction (10), characterized in that

a) the permanent-magnetic flux is generated by at least one permanent magnet attached to the movable part of the bearing (8),

b) the permanent magnet has a least two regions (9a, 9b) separated by a gap (11) orientated perpendicular to the flux direction (10), and

c) a stationary plate (12) made of unmagnetizable material of high electrical conductivity projects into the gap (11) without touching the movable part of the bearing (8).

2. Magnetic bearing according to Claim 1, characterized in that outside the gap (11) the plate (12) has a material thickening (14).

3. Magnetic bearing according to Claims 1 or 2, characterized in that the movable part of the bearing (8) and the stationary parts of the bearing (3a, 3b) are rotationally symmetrical, the stationary parts of the bearing (3a, 3b) being connected to one another by a hollow cylinder (4), which consists of a material with high magnetic conductivity, to conduct the permanent-magnetic flux.

4. Use of a magnetic bearing according to one of the preceding Claims to stabilize a passive permanent-magnetic bearing system.

## Revendications

1. Palier magnétique pour la stabilisation sans contact de la position de corps suivant trois axes, qui comporte sur le côté opposé d'un élément de palier mobile (8), des éléments de palier fixes (3a, 3b), du type dans lequel on maintient entre les éléments de palier fixes, un flux d'aimant permanent qui traverse l'élément de palier mobile suivant une direction, et dans lequel, pour produire des forces de rappel parallèles à la direction du flux (10), des bobines électriques (5a, 5b) sont montées sur les éléments de palier fixe et sont commandées par un système-capteur (6) détectant sans contact la position de l'élément de palier mobile (8) et par un régulateur (7), caractérisé par le fait

a) que le flux d'aimant permanent est produit par au moins un aimant permanent monté sur l'élément de palier mobile (8),

b) que l'aimant permanent comporte deux sections (9a, 9b) séparées par une fente (11) orientée perpendiculairement à la direction du flux, et

c) que dans la fente (11) pénètre, sans toucher l'élément de palier mobile (8), une plaque fixe (12) faite avec un matériau non magnétisable et ayant une conductibilité électrique élevée.

2. Palier magnétique selon la revendication 1, caractérisé par le fait que la plaque (13) comporte, à l'extérieur de la fente, un épaississement (14) de sa matière constitutive.

3. Palier magnétique selon la revendication 1 ou 2, caractérisé par le fait que l'élément de palier mobile (8) et les éléments de palier fixes (3a, 3b) sont réalisés de manière à présenter une symétrie de rotation, les éléments de palier fixes étant reliés entre eux, pour le guidage du flux à aimant permanent, à l'aide d'un cylindre creux (4) qui est fait avec un matériau de forte perméabilité.

4. Mise en œuvre d'un palier magnétique selon l'une des revendications précédentes pour la stabilisation d'un système de palier passif à aimant permanent.

# FIG. 1

# FIG. 2